# EUROPÄISCHE PATENTANMELDUNG

(11) **EP 3 501 719 A1**
(43) Veröffentlichungstag der Anmeldung: **26.06.2019**
(21) Anmeldenummer: 17209963.2
(22) Anmeldetag: 22.12.2017
(51) Int. Cl.: B23K 9/16, B23K 9/28, B23K 9/29, B23K 9/133, B23K 9/32

(54) **SCHWEISSGERÄT MIT WECHSELBAREM GEKÜHLTEM SCHWEISSBRENNER UND/ODER SCHLAUCHPAKET UND VERFAHREN ZUM WECHSELN DES GEKÜHLTEN SCHWEISSBRENNERS UND/ODER SCHLAUCHPAKETS**

(71) Anmelder: FRONIUS INTERNATIONAL GmbH, 4643 Pettenbach (AT)
(72) Erfinder: Leonhartsberger, Andreas, 4643 Pettenbach (AT); Haberler, Wolfgang, 4643 Pettenbach (AT); Baumgartner, Sascha, 4643 Pettenbach (AT); Pöttinger, Markus, 4643 Pettenbach (AT)
(74) Vertreter: Patentanwälte Pinter & Weiss OG

(57) **Zusammenfassung**

Um bei einem Schweißgerät mit einem mit Kühlmittel gekühlten Schweißbrenner einen einfachen Wechsel des Schweißbrenners und/oder des Schlauchpakets mit möglichst geringem apparativem Aufwand zu realisieren, ist im Schweißgerät (1) eine Verbindungsleitung (20) vorgesehen, die zwischen der Schutzgasleitung (13) und der Kühlmittelvorlaufleitung (8) oder der Kühlmittelrücklaufleitung (9) angeordnet ist und im Schweißgerät (1) ein Spülventil (21) angeordnet ist, um die Schutzgasleitung (13) über die Verbindungsleitung (20) bedarfsweise mit der Kühlmittelvorlaufleitung (8) oder der Kühlmittelrücklaufleitung (9) zu verbinden.

## Beschreibung

Die gegenständliche Erfindung betrifft ein Schweißgerät mit einem gekühlten Schweißbrenner, mit einem damit verbundenen Schlauchpaket mit einer Schutzgasleitung und einer Kühlmittelvorlaufleitung und einer Kühlmittelrücklaufleitung eines Kühlmittelkreises, wobei die Schutzgasleitung den Schweißbrenner mit einem Schutzgasbehälter verbindet, und im Schweißbrenner ein Schweißbrennerkühlkreis mit einem Kühlmittelvorlauf und einem damit verbundenen Kühlmittelrücklauf vorgesehen ist, wobei an den Kühlmittelvorlauf die Kühlmittelvorlaufleitung angeschlossen ist und an den Kühlmittelrücklauf die Kühlmittelrücklaufleitung angeschlossen ist. Ferner betrifft die Erfindung ein Verfahren zum Wechseln eines Schweißbrenners und/oder eines Schlauchpakets eines Schweißgerätes, wobei der Schweißbrenner mit dem Schlauchpaket einer Schweißeinheit des Schweißgerätes verbunden wird, wobei der Schweißbrenner zum Schweißen gekühlt wird, indem durch einen Schweißbrennerkühlkreis mit einem Kühlmittelvorlauf und einem damit verbundenen Kühlmittelrücklauf im Schweißbrenner Kühlmittel umgewälzt wird, indem dem Schweißbrennerkühlkreis über eine mit dem Kühlmittelvorlauf verbundene Kühlmittelvorlaufleitung im Schlauchpaket Kühlmittel zugeführt wird, das vom Schweißbrenner über eine mit dem Kühlmittelrücklauf verbundene Kühlmittelrücklaufleitung im Schlauchpaket abgeführt wird und der Schweißbrenner zum Schweißen über eine Schutzgasleitung im Schlauchpaket mit Schutzgas versorgt wird.

Schweißbrenner unterliegen hohen thermischen Belastungen und werden deshalb oftmals zwangsgekühlt ausgeführt. Hierfür wird Kühlmittel, in den meisten Fällen eine Kühlflüssigkeit, wie beispielsweise Wasser, eventuell auch mit Zusätzen wie z.B. Frostschutz, durch den Schweißbrenner umgewälzt, der auf diese Weise gekühlt wird. Das Kühlmittel wird dem Schweißbrenner über ein Schlauchpaket in einem eigenen Kühlmittelkreis zugeführt. Bei gängigen Schweißgeräten ist der Schweißbrenner mit einem Schlauchpaket mit der Schweißstromquelle verbunden, wobei im Schlauchpaket alle erforderlichen Leitungen angeordnet sind, insbesondere Schweißstromleitung, Schweißdrahtzuführung, gegebenenfalls Masse, Schutzgas oder Plasmagas (Im Falle eines Plasmaschweißbrenners), Kühlmittelvorlauf und Kühlmittelrücklauf und gegebenenfalls auch Steuerleitungen zwischen der Schweißstromquelle und dem Schweißbrenner. Beim Wechsel des Schweißbrenners, z.B. aufgrund von Verschleiß, und/oder des Schlauchpakets, z.B. im Falle eines beschädigten Schlauchpakets, ergibt sich dadurch aber das Problem, das Kühlmittel austreten kann, was natürlich in der Umgebung des Schweißgerätes, insbesondere aufgrund der Verschmutzung von Brenner und oder Werkstück oder Gefährdung von Personen, unerwünscht ist. Um das zu verhindern ist es unter anderem bekannt, im Kühlmittelkreis Ventile anzuordnen, die ein unkontrolliertes Austreten von Kühlmittel unterbinden, wenn der Schweißbrenner oder das Schlauchpaket entfernt wird. Dabei kommen auch selbstschließende Ventile zur Anwendung, die Schließen, wenn der Schweißbrenner entfernt wird. Das Problem dabei ist aber die verbleibende Restmenge an Kühlmittel im Schlauchpaket und/oder im Schweißbrenner, die natürlich ebenfalls austreten kann.

In der DE 10 2015 204 812 A1 wird dieses Problem damit umgangen, indem der Kühlmittelkreislauf leergesaugt wird, bevor der Schweißbrenner oder das Schlauchpaket entfernt wird. Dazu wird im Vorlauf oder Rücklauf ein Unterdruck erzeugt, mit dem Kühlmittel aus dem Kühlmittelkreislauf leergesaugt wird. Die Erzeugung des Unterdrucks bedingt einen erhöhten apparativen Aufwand, , was ebenso die Kosten für die Schweißanlage erhöht.

Es ist daher eine Aufgabe der gegenständlichen Erfindung, ein Schweißgerät mit einem mit Kühlmittel gekühlten Schweißbrenner anzugeben, bei dem der Wechsel des Schweißbrenners und/oder des Schlauchpakets mit möglichst geringem apparativem Aufwand möglich ist.

Diese Aufgabe wird dadurch erreicht, indem im Schweißgerät eine Verbindungsleitung vorgesehen ist, die zwischen der Schutzgasleitung und der Kühlmittelvorlaufleitung oder der Kühlmittelrücklaufleitung angeordnet ist und im Schweißgerät ein Spülventil angeordnet ist, um die Schutzgasleitung über die Verbindungsleitung bedarfsweise mit der Kühlmittelvorlaufleitung oder der Kühlmittelrücklaufleitung zu verbinden. Das ermöglicht ein Verfahren zum Wechsel des Schweißbrenners und/oder des Schlauchpakets bei dem vor dem Wechsel des Schweißbrenners und/oder des Schlauchpakets das Umwälzen von Kühlmittel gestoppt wird und Schutzgas aus der Schutzgasleitung über eine Verbindungsleitung entweder in die Kühlmittelvorlaufleitung oder in die Kühlmittelrücklaufleitung geleitet wird, um den Schweißbrennerkühlkreis im Schweißbrenner und zumindest teilweise die Kühlmittelvorlaufleitung und die Kühlmittelrücklaufleitung mit Schutzgas zu spülen.

Die Erfindung nutzt den Umstand, dass Schweißgeräte oftmals Schutzgasschweißgeräte sind, bei denen zum Schweißen ein Schutzgas in den Schweißbrenner geleitet wird, das die Schweißstelle umgibt. Erfindungsgemäß wird nun das Schutzgas auch zum Spülen des Kühlmittelkreises verwendet, wodurch der apparative Aufwand erheblich gesenkt werden kann und das Schweißgerät als Ganzes einfacher und mit wenigen zusätzlichen Einrichtungen aufgebaut werden kann. Nachdem der Schutzgasstrom in der Regel durch eine Regelarmatur am Schutzgasbehälter eingestellt ist, wird der Schutzgasstrom bei Spülen gleichzeitig beschränkt, was aus Sicherheitsaspekten im Bereich des Schweißgerätes vorteilhaft ist. Nicht zuletzt liegt das Schutzgas in der Regel mit hohem Druck vor. Durch das damit herrschende hohe Druckgefälle zum Spülen, kann auch die Spülzeit verringert werden.

In einer vorteilhaften, technisch sehr einfachen Ausgestaltung ist das Spülventil als Wechselventil ausgeführt, das entweder die Kühlmittelvorlaufleitung oder die Kühlmittelrücklaufleitung durchschaltet, oder die Schutzgasleitung mit der Kühlmittelvorlaufleitung oder der Kühlmittelrücklaufleitung verbindet.

Alternativ kann das Spülventil auch als 3/2-Wegeventil ausgeführt ist, das entweder die Kühlmittelvorlaufleitung oder die Kühlmittelrücklaufleitung durchschaltet, oder die Schutzgasleitung über die Verbindungsleitung mit der Kühlmittelvorlaufleitung oder der Kühlmittelrücklaufleitung verbindet. In diesem Fall kann auch auf weitere Ventile verzichtet werden.

Ist in der Verbindungsleitung zwischen dem Spülventil und der Abzweigung der Verbindungsleitung von der Schutzgasleitung ein erstes Sperrventil zum bedarfsweisen Absperren der Verbindungsleitung angeordnet, kann die Verbindungsleitung im normalen Schweißbetrieb abgesperrt werden, um unerwünschte Querströmungen zwischen Kühlmittel und Schutzgas zu unterbinden.

Für die Funktionssicherheit des Schweißgerätes ist es vorteilhaft, wenn in der Verbindungsleitung ein Rückschlagventil vorgesehen, das bei einem Druckgefälle in Richtung Schutzgasleitung sperrt. Auf diese Weise kann sicher verhindert werden, dass Kühlmittel in die Schutzgasleitung gelangen kann.

Um zu verhindern, dass Schutzgas über die Schutzgasleitung verloren geht, kann in der Schutzgasleitung stromabwärts von der Abzweigung der Verbindungsleitung ein zweites Sperrventil zum bedarfsweisen Absperren der Schutzgasleitung in Richtung zum Schweißbrenner angeordnet sein.

Falls am Schweißgerät eine eigene Schweißdrahtvorschubeinheit vorgesehen ist, in der die Schutzgasleitung, sowie zumindest die Kühlmittelvorlaufleitung oder die Kühlmittelrücklaufleitung zumindest teilweise angeordnet sind, kann die Verbindungsleitung und das Spülventil in der Schweißdrahtvorschubeinheit angeordnet werden. Damit ist keine aufwendige Adaption einer Schweißstromquelle erforderlich, sondern nur einfache Anpassungen in der Drahtvorschubeinheit. Auf diese Weise kann ein Schweißgerät auch einfach mit der Spülfunktion ergänzt werden.

Um die benötigte Spülzeit zu optimieren, kann in der Kühlmittelvorlaufleitung oder der Kühlmittelrücklaufleitung ein Sensor angeordnet ist, der eine Kühlmittelströmung oder Schutzgas detektiert.

Um nicht die gesamte Kühlmittelvorlaufleitung oder Kühlmittelrücklaufleitung spülen zu müssen, kann in der Kühlmittelvorlaufleitung oder der Kühlmittelrücklaufleitung ein Entlüftungsventil angeordnet sein. Damit ist nur bis zum Entlüftungsventil zu spülen und die Spülzeit kann reduziert werden, was insbesondere bei sehr langen Schlauchpakten vorteilhaft sein kann. Dazu ist es besonders vorteilhaft, wenn das Entlüftungsventil im Schlauchpaket, vorzugsweise in der Nähe einer ersten Schlauchpaketkupplung zwischen Schweißbrenner und Schlauchpaket, angeordnet ist.

In einer einfachen Ausgestaltung wird für eine vorgegebene Spülzeit mit Schutzgas gespült. Die Spülzeit kann dabei auch an das Schweißgerät angepasst werden, beispielsweise an die Länge des Schlauchpakets.

Um das Spülergebnis zu verbessern kann vorgesehen sein, dass nach dem Spülen mit einer ersten Spülzeit während einer zweiten Spülzeit gepulst mit Schutzgas gespült wird.

Aus Sicherheitsgründen kann vorgesehen sein, dass vor dem Spülen mit Schutzgas für eine vorgegebene Abkühlzeit weiter Kühlmittel durch den Schweißbrenner umgewälzt wird. Alternativ kann vor dem Spülen mit Schutzgas auch weiter Kühlmittel durch den Schweißbrenner umgewälzt wird, bis der Schweißbrenner eine vorgegebene Temperatur erreicht hat.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine erfindungsgemäßes Schweißgerät mit der Möglichkeit zum Spülen mit Schutzgas vor dem Wechsel eines Schweißbrenners oder Schlauchpaketes,
Fig.2 eine Ausführung eines Schweißgerätes mit einer eigenen Drahtvorschubeinheit,
Fig.3 ein mögliches Verfahren zum Spülen mit Schutzgas und
Fig.4 eine vorteilhafte Anordnung eines Entlüftungsventils im Schlauchpaket und die zu spülende Strecke der Kühlmittelrücklaufleitung oder Kühlmittelvorlaufleitung zu verringern.

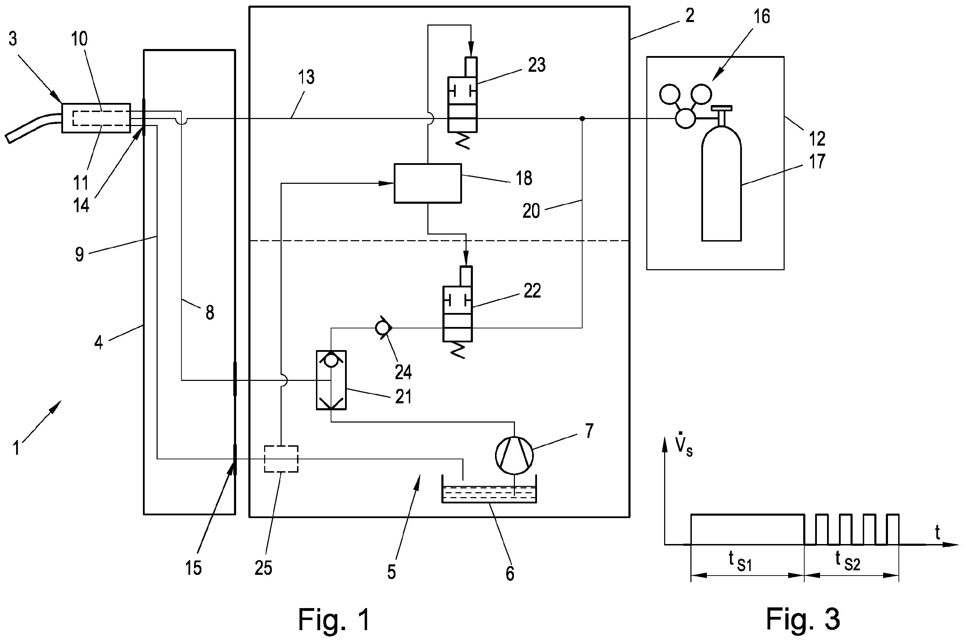

Fig.1 zeigt ein erfindungsgemäßes Schweißgerät 1 zum Schutzgasschweißen mit einem Schweißbrenner 3. Das Schweißgerät 1 kann für einen beliebigen Schutzgasschweißprozess, wie beispielsweise ein Metall-Inertgasschweißen (MIG), ein Metall-Aktivgasschweißen (MAG), ein Wolfram-Inertgasschweißen (WIG) oder ein Plasmaschweißen, gedacht sein. Der Schweißbrenner 3 ist in bekannter Weise mit einem Schlauchpaket 4 mit einer weiteren Schweißeinheit, z.B. eine Schweißstromquelle 2 wie in Fig.1, verbunden. Im Schlauchpaket 4 sind üblicherweise alle für das Schweißen benötigten Leitungen angeordnet, die den Schweißbrenner 3 mit allen dafür benötigten Medien und Energie versorgen. Das Schlauchpaket 4 kann aber auch aus mehreren einzelnen Leitern oder Leiterpaketen bestehen. In Fig.1 sind jedoch nur die Leitungen dargestellt, die für die Erklärung der Erfindung wichtig sind.

Der Schweißbrenner 3 nach der Erfindung ist ein zwangsgekühlter Schweißbrenner 3, durch den ein Kühlmittel umgewälzt wird. Hierfür ist ein Kühlmittelkreis 5 vorgesehen. Der Kühlmittelkreis 5 ist im in Fig.1 dargestellten Ausführungsbeispiel in der Schweißstromquelle 2 angeordnet, könnte aber auch in einer separaten Einheit oder in einer anderen Schweißeinheit angeordnet sein.

Der Kühlmittelkreis 5 umfasst beispielsweise einen Kühlmitteltank 6 und eine Kühlmittelpumpe 7, die Kühlmittel aus dem Kühlmitteltank 6 in einer Kühlmittelvorlaufleitung 8 dem Kühlmittelvorlauf 10 im Schweißbrenner 3 zuführt. Der Kühlmittelvorlauf 10 im Schweißbrenner 3 ist zur Ausbildung eines Schweißbrennerkühlkreises mit einem Kühlmittelrücklauf 11 im Schweißbrenner 3 verbunden, der wiederum mit einer Kühlmittelrücklaufleitung 9 des Kühlmittelkreises 5 verbunden ist, über den das Kühlmittel rückgeführt wird, beispielsweise in den Kühlmitteltank 6. Die Kühlmittelvorlaufleitung 8 und die Kühlmittelrücklaufleitung 9 sind üblicherweise im Schlauchpaket 4 angeordnet. Selbstverständlich ist aber weder unbedingt eine Kühlmittelpumpe 7, noch ein Kühlmitteltank 6 notwendig. Beispielsweise könnte die Kühlmittelvorlaufleitung 8 an einen Brauchwasseranschluss angeschlossen sein und das Kühlmittel, in diesem Fall Brauchwasser, könnte durch den Druck des Brauchwassers umgewälzt werden. Die Kühlmittelrücklaufleitung 9 könnte dann beispielsweise direkt an einen Kanal angeschlossen sein.

Am Schweißgerät 1 ist ferner ein Schutzgasbehälter 12 für das Schutzgas für den Schweißprozess, beispielsweise eine Schutzgasflasche 17 mit einer Flaschenarmatur 16 zum Einstellen des Volumenstromes des Schutzgases und/oder des Drucks des Schutzgases, vorgesehen, die über einer Schutzgasleitung 13 ebenfalls mit dem Schweißbrenner 3 verbunden ist, um dem Schweißbrenner 3 Schutzgas aus dem Schutzgasbehälter 12 zuzuführen. Die Schutzgasleitung 13 ist üblicherweise ebenso im Schlauchpaket 4 angeordnet.

Zwischen Schweißbrenner 3 und dem Schlauchpaket 4 ist eine erste Schlauchpaketkupplung 14 vorgesehen, mit der der Schweißbrenner 3 vom Schlauchpaket 4 getrennt werden kann. Am anderen Ende des Schlauchpakets 4 kann eine zweite Schlauchpaketkupplung 15 vorgesehen sein, um das Schlauchpaket 4 bedarfsweise von der Schweißeinheit, hier der Schweißstromquelle 2, zu entfernen.

Am Schweißgerät 1 ist eine Verbindungsleitung 20 vorgesehen, die zwischen der Schutzgasleitung 13 und der Kühlmittelvorlaufleitung 8 oder der Kühlmittelrücklaufleitung 9 angeordnet ist. Dazu ist die Schutzgasleitung 13 mit einem Ende mit der Schutzgasleitung 13 verbunden und mit dem anderen Ende entweder mit der Kühlmittelvorlaufleitung 8 oder der Kühlmittelrücklaufleitung 9. Ferner ist im Schweißgerät 1 ein Spülventil 21 angeordnet, das die Schutzgasleitung 13 bedarfsweise mit der Kühlmittelvorlaufleitung 8 oder der Kühlmittelrücklaufleitung 9 verbindet, um den Schweißbrennerkühlkreis mit Schutzgas zu spülen. Das Spülventil 21 kann verschieden ausgeführt sein, wie nachfolgend noch ausgeführt wird. Durch das Spülen wird natürlich auch die Kühlmittelvorlaufleitung 8 und die Kühlmittelrücklaufleitung 9 zumindest teilweise mit Schutzgas gespült. "Spülen" bedeutet dabei natürlich, dass das Kühlmittel in den Leitungen vom Schutzgas verdrängt wird. Zum Spülen wird eine eventuell vorhandene Kühlmittelpumpe 7 selbstverständlich ausgeschaltet oder die Kühlmittelvorlaufleitung 8 von einer Kühlmittelversorgung getrennt. Wenn die Schutzgasleitung 13 mit der Kühlmittelrücklaufleitung 9 verbunden ist, dann ist die Kühlmittelpumpe 7 natürlich so auszuführen, dass über die Kühlmittelpumpe 7 Kühlmittel in den Kühlmitteltank 6 rückgeführt werden kann, oder es ist eine Bypassleitung um die Kühlmittelpumpe 7 vorzusehen, die beim Spülen geöffnet wird. In der Kühlmittelrücklaufleitung 9 kann zwischen der Einmündung der Verbindungsleitung 20 und dem Kühlmitteltank 6 auch ein Rückschlagventil angeordnet sein, um zu verhindern, dass das Schutzgas direkt in den Kühlmitteltank 6 strömt.

Das Spülventil 21 ist in einer ersten Ausgestaltung vorteilhafterweise als Wechselventil ausgeführt (wie in Fig.1 dargestellt), das entweder die Kühlmittelrücklaufleitung 9 oder die Kühlmittelrücklaufleitung 9 durchschaltet, oder die Verbindungsleitung 20 mit der Kühlmittelvorlaufleitung 8 oder der Kühlmittelrücklaufleitung 9 verbindet. Ein solches Wechselventil kann auf einfach Weise auch durch zwei gegensinnige Rückschlagventile, eines in der Verbindungsleitung 20 und eines in der Kühlmittelvorlaufleitung 8 oder der Kühlmittelrücklaufleitung 9, ausgeführt sein und rein druckgesteuert sein. Alternativ kann das Wechselventil auch von einer Steuereinheit gesteuert ausgeführt sein. Wenn der Druck des Kühlmittels größer ist als der Druck des Schutzgases, dann kann ein solches Wechselventil rein druckgesteuert werden. Wird die Kühlmittelpumpe 7 beispielsweise gestoppt, dann würde der Druck des Schutzgases dafür sorgen, dass das Wechselventil die Verbindungsleitung 20 durchschaltet.

Vorzugsweise ist in der Verbindungsleitung 20 aber zwischen dem Spülventil 21 und der Schutzgasleitung 13 auch ein erstes Sperrventil 22 (hier ein 2/2 Wegeventil) angeordnet sein, das eine ungewollte Strömung durch die Verbindungsleitung 20 unterbindet. Das erste Sperrventil 22 ist beispielsweise ein gesteuertes Umschaltventil, das beispielsweise vom Druck in der Kühlmittelvorlaufleitung 8 oder von einer Schweißgerätesteuerung 18 gesteuert wird. Damit kann mit dem ersten Sperrventil 22 gesteuert werden, wann das Wechselventil schaltet.

Zusätzlich kann in der Verbindungsleitung 20, beispielsweise zwischen Spülventil 21 und erstem Sperrventil 22, ein Rückschlagventil 24 angeordnet sein, dass die Verbindungsleitung 20 bei einem Druckgefälle in Richtung Schutzgasleitung 13 sperrt. Damit kann sichergestellt werden, dass kein Kühlmittel in die Schutzgasleitung 13 gelangen kann.

Zwischen Spülventil 21 und der Kühlmittelpumpe 7 oder dem Kühlmitteltank 6 (je nachdem welche der beiden mit der Verbindungsleitung 20 verbunden ist), kann ebenfalls ein Rückschlagventil angeordnet sein, um eine Strömung von Schutzgas in Richtung Kühlmitteltank 6 sicher zu unterbinden.

Das Spülventil 21 kann aber auch als 3/2 Wegeventil ausgeführt sein, um entweder die Verbindungsleitung 20 mit der Kühlmittelvorlaufleitung 8 oder der Kühlmittelrücklaufleitung 9 zu verbinden, oder die Kühlmittelvorlaufleitung 8 oder die Kühlmittelrücklaufleitung 9 durchzuschalten. In diesem Fall kann auch auf ein zusätzliches erstes Sperrventil 22 und/oder Rückschlagventil 24 verzichtet werden.

In der Schutzgasleitung 13 kann ein zweites Sperrventil 23 angeordnet sein, um die Schutzgaszufuhr zum Schweißbrenner 3 zu unterbinden. Das zweite Sperrventil 23 ist beispielsweise ein gesteuertes Umschaltventil (2/2 Wegeventil), das beispielsweise von einer Schweißgerätesteuerung 18 gesteuert wird. Das zweite Sperrventil 23 wird vorzugsweise nur während des Schweißens geöffnet, um den Schutzgasverbrauch gering zu halten und um zu verhindern, dass Schutzgas während dem Wechsel des Schweißbrenners 3 oder des Schlauchpakets 4 austritt.

Die Funktion des erfindungsgemäßen Schweißgerätes 1 wird nachfolgend anhand der Ausführung nach der Fig.1 erläutert.

Zum Schweißen ist das erste Sperrventil 22 so geschaltet, dass die Verbindungsleitung 20 unterbrochen ist. Das zweite Sperrventil 23 ist gleichzeitig so geschaltet, dass die Schutzgasleitung 13 den Schutzgasbehälter 12 mit dem Schweißbrenner 3 verbindet. Das ist in Fig.1 dargestellt. Die Kühlmittelpumpe 7 ist aktiviert und fördert Kühlmittel aus dem Kühlmitteltank 6 über die Kühlmittelvorlaufleitung 8 in den Schweißbrennerkühlkreis. Das Kühlmittel wird von dort über die Kühlmittelrücklaufleitung 9 in den Kühlmitteltank 6 rückgeführt. Aufgrund des Druckes in der Kühlmittelvorlaufleitung 8 und der durch das erste Sperrventil 22 geschlossenen Verbindungsleitung 20 schaltet das Spülventil 21 in Form eines druckgesteuerten Wechselventils die Kühlmittelvorlaufleitung 8 durch. Falls der Schweißbrenner 3 und/oder das Schlauchpaket 4 getauscht wird oder werden muss, wird der Schweißbrennerkühlkreis und die Kühlmittelvorlaufleitung 8 und Kühlmittelrücklaufleitung 9 vorher mit Schutzgas gespült.

Vor dem Wechsel des Schweißbrenners 3 ist vorzugsweise eine Abkühlphase vorgesehen, während der der Kühlkreis 5 nach dem Beenden des Schweißens noch aktiviert ist, um den Schweißbrenner 3 aus Sicherheitsgründen abzukühlen. Hierfür ist entweder eine vorgegebene Abkühlzeit vorgesehen oder die Temperatur des Schweißbrenners 3 wird überwacht und der Kühlkreis 5 solange aktiviert, bis eine vorgegebene Temperatur erreicht wird. Im letzten Fall ist am Schweißbrenner 3 natürlich ein Temperatursensor erforderlich, um die Temperatur des Schweißbrenners 3 zu erfassen. Das Einhalten der Abkühlzeit oder das Erreichen einer gewissen Temperatur des Schweißbrenners 3 wird vorzugsweise von der Schweißgerätesteuerung 18 überwacht. Wenn der Schweißbrenner 3 nicht unmittelbar nach dem Schweißen getauscht wird, ist das natürlich nicht unbedingt erforderlich.

Vor dem Wechsel des Schweißbrenners 3 und/oder des Schlauchpakets 4 ist der Kühlkreis 5 zu deaktivieren, beispielsweise durch Stoppen der Kühlmittelpumpe 7 oder durch Absperren oder Trennen einer anderen Kühlmittelversorgung. Danach kann das erste Sperrventil 22 auf Spülen umgestellt werden, beispielsweise durch die Schweißgerätesteuerung 18 oder durch den niedrigen Druck in der Kühlmittelvorlaufleitung 8, wodurch die Verbindungsleitung 20 durchgeschalten wird und Schutzgas über die Verbindungsleitung 20 zum Spülventil 21 strömt. Durch den nun wirkenden Druck in der Verbindungsleitung 20 schaltet das Spülventil 21 und verbindet die Schutzgasleitung 13 mit der Kühlmittelvorlaufleitung 8. Vorzugsweise wird auch das zweite Sperrventil 23 geschlossen. Gleichzeitig wird durch das Spülventil 21 die Kühlmittelvorlaufleitung 8 in Richtung zur Kühlmittelpumpe 7 gesperrt, sodass auf diesem Weg kein Schutzgas entweichen kann. Das unter Druck stehende Schutzgas verdrängt das Kühlmittel in der Kühlmittelvorlaufleitung 8 und strömt in Richtung Schweißbrenner 3, wo es das Kühlmittel im Schweißbrennerkühlkreis verdrängt. Das Schutzgas verdrängt auch das Kühlmittel in der Kühlmittelrücklaufleitung 9. Bei Spülen fließt das verdrängte Kühlmittel über die Kühlmittelrücklaufleitung 9 in den Kühlmitteltank 6 zurück. Nach dem Spülen befindet sich somit kein Kühlmittel mehr, oder nur mehr äußerst geringe Mengen an Kühlmittel, im Schweißbrenner 3 und in der Kühlmittelvorlaufleitung 8 und Kühlmittelrücklaufleitung 9. Damit kann der Schweißbrenner 3 und/oder das Schlauchpaket 4 gewechselt werden, ohne das Kühlmittel austritt.

Während des Spülens ist vorzugsweise auch das zweite Sperrventil 23 im Sperrzustand, um zu vermeiden, dass weiter Schutzgas durch die Schutzgasleitung 13 gefördert wird und damit verloren geht.

Nach dem Spülen mit Schutzgas wird die Verbindungsleitung 20 vorzugsweise wieder gesperrt, beispielsweise indem das erste Sperrventil 22 wieder umgeschaltet wird, was die Zufuhr von Schutzgas in die Kühlmittelvorlaufleitung 8 unterbindet und verhindert, dass Schutzgas beim Wechsel verloren geht.

Nach dem Wechsel kann die Kühlmittelvorlaufleitung 8, des Schweißbrennerkühlkreises und der Kühlmittelrücklaufleitung 9 wieder mit Kühlmittel befüllt werden. Hierzu wird beispielsweise die Kühlmittelpumpe 7 aktiviert, wodurch Kühlmittel durch die Kühlmittelvorlaufleitung 8 gefördert wird. Dadurch wird das Spülventil 21 in Form des Wechselventils umgeschaltet und die Kühlmittelvorlaufleitung 8 durchgeschaltet. Das Kühlmittel verdrängt nun das Schutzgas aus der Kühlmittelvorlaufleitung 8, dem Schweißbrennerkühlkreises und der Kühlmittelrücklaufleitung 9.

Diese Funktion kann natürlich auch mit anderen Ausführungen des Spülventils 21 realisiert werden.

Das Spülen mit Schutzgas kann für eine vorgegebene Spülzeit erfolgen. Es kann in der Kühlmittelrücklaufleitung 9 aber auch ein Sensor 25 (angedeutet in Fig.1), beispielsweise ein Flüssigkeitssensor oder Gassensor, vorgesehen sein, der eine Kühlmittelströmung oder das Schutzgas erfasst. Der Sensor 25 ist natürlich in der Leitung des Kühlkreises (entweder Kühlmittelvorlaufleitung 8 oder Kühlmittelrücklaufleitung 9) angeordnet, die nicht mit der Verbindungsleitung 20 verbunden ist. Wenn das Kühlmittel bis zu einem Durchflusswächter verdrängt wurde, erfasst der Flüssigkeitssensor keine Kühlmittelströmung mehr, was signalisiert, dass das Kühlmittel vollständig verdrängt wurde. Alternativ erkennt der Sensor 25 als Gassensor Schutzgas in der Kühlmittelrücklaufleitung 9, was ebenfalls signalisiert, dass das Spülen abgeschlossen ist. Vorzugsweise ist der Sensor 25 mit der Schweißgerätesteuerung 18 verbunden, die auch das Spülen überwacht und steuert.

Auf die gleiche Weise kann mit einem Sensor 25 auch das Wiederbefüllen mit Kühlmittel überwacht werden.

Falls ein Gassensor oder Flüssigkeitssensor als Sensor 25 verwendet wird, kann dieser auch verwendet werden, um eine Fehlfunktion zu erkennen. Wird während des normalen Betriebs z.B. Schutzgas in der Kühlmittelvorlaufleitung 8 detektiert, liegt eine Fehlfunktion vor, die beispielswiese zum Abstellen des Schweißgerätes 1 führt. In diesem Fall ist beim Wiederbefüllen der Kühlmittelvorlaufleitung 8, des Schweißbrennerkühlkreises und der Kühlmittelrücklaufleitung 9 aber darauf zu achten, dass das Ansprechen des Sensors 25 im Falle eines Gassensors ignoriert wird, bis das Befüllen abgeschlossen ist.

Das Spülen mit Schutzgas kann auch wie in Fig.3 dargestellt durchgeführt werden. Dabei wird zuerst für eine erste Spülzeit t_{S1} mit einem Volumenstrom V_{S} (der sich im Wesentlichen aus dem Druck des Schutzgases ergibt) gespült. Die Spülzeit t_{S1} ist beispielsweise vorgegeben oder wird mit einem Sensors 25 wie beschrieben überwacht. Danach erfolgt für eine zweite Spülzeit t_{S2} ein Pulsen des Schutzgases. Dazu wird beispielsweise das erste Sperrventil 22 hintereinander für eine kurze Zeitspanne geschlossen und für eine kurze Zeitspanne wieder geöffnet. Die Zeitspannen und die Anzahl der Pulse können vorgegeben sein und werden vorzugsweise von der Schweißgerätesteuerung 18 gesteuert. Das Pulsen verbessert das Verdrängen des Kühlmittels und damit das Spülergebnis.

Oftmals ist das Schweißgerät 1 mit einer separaten Drahtvorschubeinheit 27 als zusätzlicher Schweißeinheit ausgestattet. Dabei ist die Schweißstromquelle 2 mittels eines Zwischenschlauchpakets 26 mit der Drahtvorschubeinheit 27 verbunden, die wiederum über ein Schlauchpaket 4 mit dem Schweißbrenner 3 verbunden ist. In diesem Fall kann die Verbindungsleitung 20, das erste Sperrventil 22, das Spülventil 21 und gegebenenfalls das Rückschlagventil 24 und ein zweites Sperrventil 23 auch in der Drahtvorschubeinheit 27 angeordnet sein. An der grundsätzlichen Funktion ändert sich dadurch allerdings nichts.

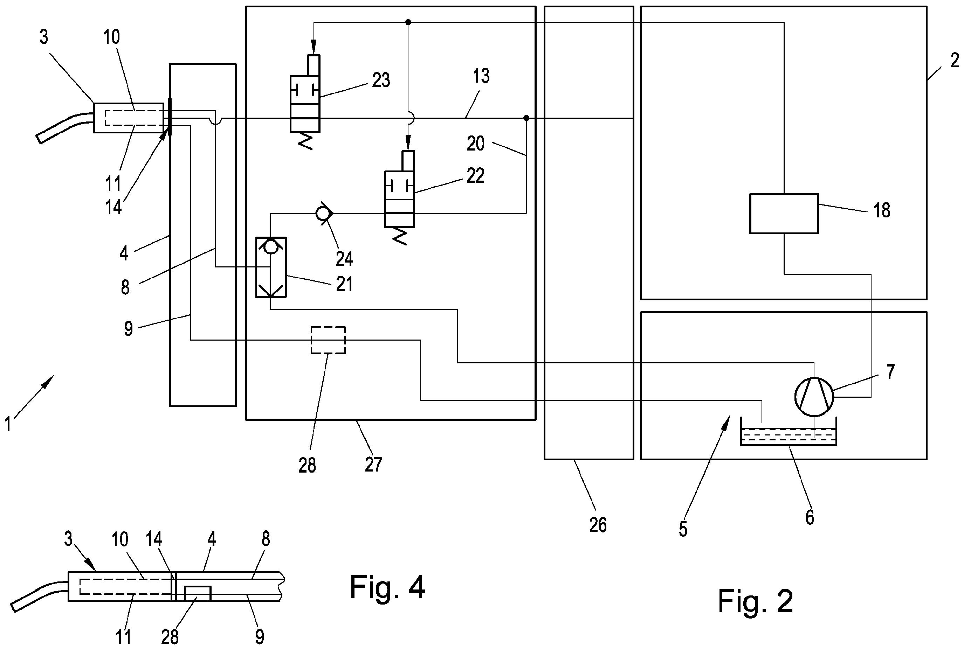

Ebenso kann in der Kühlmittelrücklaufleitung 9, oder in der Kühlmittelvorlaufleitung 8 (je nachdem womit die Verbindungsleitung 20 verbunden ist), auch ein Entlüftungsventil 28 (angedeutet in Fig.2) angeordnet sein, das öffnet, sobald Schutzgas das Entlüftungsventil 28 erreicht. Das Entlüftungsventil 28 kann auch mit dem Sensor 25 kombiniert werden. Damit kann erreicht werden, dass nicht die gesamte Kühlmittelrücklaufleitung 9 bis zum Kühlmitteltank 6 gespült werden muss. Das kann die erforderliche Spülzeit verkürzen. Außerdem kann damit verhindert werden, dass der Kühlmitteltank 6 überläuft.

Ein solches Entlüftungsventil 28 kann auch an anderer Stelle angeordnet wie anhand Fig.4 erläutert wird. Hier ist das Entlüftungsventil 28 im Schlauchpaket 4, vorzugsweise in der Nähe der ersten Schlauchpaketkupplung 14, angeordnet. In diesem Fall muss nur das kurze Stück zwischen Schweißbrenner 3 und Entlüftungsventil 28 gespült werden, um den Schweißbrenner 3 wechseln zu können. Damit kann die notwendige Spülzeit für einen Schweißbrennerwechsel noch weiter reduziert werden. Ebenso kann aus Gründen der Einbaulage eine Anordnung des Entlüftungsventils 28 an einer vom Schweißbrenner 3 weiter entfernten Position gewählt werden.

## Patentansprüche

1. Schweißgerät mit einem Schweißbrenner (3), mit einem damit verbundenen Schlauchpaket (4) mit einer Schutzgasleitung (13) und einer Kühlmittelvorlaufleitung (8) und einer Kühlmittelrücklaufleitung (9) eines Kühlmittelkreises (5), wobei die Schutzgasleitung (13) den Schweißbrenner (3) mit einem Schutzgasbehälter (12) verbindet, und im Schweißbrenner (3) ein Schweißbrennerkühlkreis mit einem Kühlmittelvorlauf (10) und einem damit verbundenen Kühlmittelrücklauf (11) vorgesehen ist, wobei an den Kühlmittelvorlauf (10) die Kühlmittelvorlaufleitung (8) angeschlossen ist und an den Kühlmittelrücklauf (11) die Kühlmittelrücklaufleitung (9) angeschlossen ist, **dadurch gekennzeichnet, dass** im Schweißgerät (1) eine Verbindungsleitung (20) vorgesehen ist, die zwischen der Schutzgasleitung (13) und der Kühlmittelvorlaufleitung (8) oder der Kühlmittelrücklaufleitung (9) angeordnet ist und im Schweißgerät (1) ein Spülventil (21) angeordnet ist, um die Schutzgasleitung (13) über die Verbindungsleitung (20) bedarfsweise mit der Kühlmittelvorlaufleitung (8) oder der Kühlmittelrücklaufleitung (9) zu verbinden.

2. Schweißgerät nach Anspruch 1, **dadurch gekennzeichnet, dass** das Spülventil (21) als Wechselventil ausgeführt ist, das entweder die Kühlmittelvorlaufleitung (8) oder die Kühlmittelrücklaufleitung (9) durchschaltet, oder die Schutzgasleitung (13) über die Verbindungsleitung (20) mit der Kühlmittelvorlaufleitung (8) oder der Kühlmittelrücklaufleitung (9) verbindet.

3. Schweißgerät nach Anspruch 1, **dadurch gekennzeichnet, dass** das Spülventil (21) als 3/2-Wegeventil ausgeführt ist, das entweder die Kühlmittelvorlaufleitung (8) oder die Kühlmittelrücklaufleitung (9) durchschaltet, oder die Schutzgasleitung (13) über die Verbindungsleitung (20) mit der Kühlmittelvorlaufleitung (8) oder der Kühlmittelrücklaufleitung (9) verbindet.

4. Schweißgerät nach Anspruch 1 oder 2, **dadurch gekennzeichnet, dass** in der Verbindungsleitung (20) zwischen dem Spülventil (21) und der Abzweigung der Verbindungsleitung (20) von der Schutzgasleitung (13) ein erstes Sperrventil (22) zum bedarfsweisen Absperren der Verbindungsleitung (20) angeordnet ist.

5. Schweißgerät nach einem der Ansprüche 1 bis 4, **dadurch gekennzeichnet, dass** in der Verbindungsleitung (20) ein Rückschlagventil (24) vorgesehen, das bei einem Druckgefälle in Richtung Schutzgasleitung (13) sperrt.

6. Schweißgerät nach einem der Ansprüche 1 bis 5, **dadurch gekennzeichnet, dass** in der Schutzgasleitung (13) stromabwärts von der Abzweigung der Verbindungsleitung (20) ein zweites Sperrventil (23) zum bedarfsweisen Absperren der Schutzgasleitung (13) in Richtung zum Schweißbrenner (3) angeordnet ist.

7. Schweißgerät nach einem der Ansprüche 1 bis 6, **dadurch gekennzeichnet, dass** eine Schweißdrahtvorschubeinheit (27) vorgesehen ist und die Schutzgasleitung (13), sowie zumindest die Kühlmittelvorlaufleitung (8) oder die Kühlmittelrücklaufleitung (9) zumindest teilweise in der Schweißdrahtvorschubeinheit (27) angeordnet sind, **und dass** die Verbindungsleitung (20) und das Spülventil (21) in der Schweißdrahtvorschubeinheit (27) angeordnet sind.

8. Schweißgerät nach einem der Ansprüche 1 bis 7, **dadurch gekennzeichnet, dass** in der Kühlmittelvorlaufleitung (8) oder der Kühlmittelrücklaufleitung (9) ein Sensor (25) angeordnet ist, der eine Kühlmittelströmung oder Schutzgas detektiert.

9. Schweißgerät nach einem der Ansprüche 1 bis 8, **dadurch gekennzeichnet, dass** in der Kühlmittelvorlaufleitung (8) oder der Kühlmittelrücklaufleitung (9) ein Entlüftungsventil (28) angeordnet ist.

10. Schweißgerät nach Anspruch 9, **dadurch gekennzeichnet, dass** das Entlüftungsventil (28) im Schlauchpaket (4), vorzugsweise in der Nähe einer ersten Schlauchpaketkupplung (14) zwischen Schweißbrenner (3) und Schlauchpaket (4), angeordnet ist.

11. Verfahren zum Wechseln eines Schweißbrenners (3) und/oder eines Schlauchpakets (4) eines Schweißgerätes (1), wobei der Schweißbrenner (3) mit dem Schlauchpaket (4) einer Schweißeinheit des Schweißgerätes (1) verbunden wird, wobei der Schweißbrenner (3) zum Schweißen gekühlt wird, indem durch einen Schweißbrennerkühlkreis mit einem Kühlmittelvorlauf (10) und einem damit verbundenen Kühlmittelrücklauf (11) im Schweißbrenner (3) Kühlmittel umgewälzt wird, indem dem Schweißbrennerkühlkreis über eine mit dem Kühlmittelvorlauf (10) verbundene Kühlmittelvorlaufleitung (8) im Schlauchpaket (4) Kühlmittel zugeführt wird, das vom Schweißbrenner (3) über eine mit dem Kühlmittelrücklauf (11) verbundene Kühlmittelrücklaufleitung (9) im Schlauchpaket (4) abgeführt wird und der Schweißbrenner (3) zum Schweißen über eine Schutzgasleitung (13) im Schlauchpaket (4) mit Schutzgas versorgt wird, **dadurch gekennzeichnet, dass** vor dem Wechsel des Schweißbrenners (3) und/oder des Schlauchpakets (4) das Umwälzen von Kühlmittel gestoppt wird und Schutzgas aus der Schutzgasleitung (13) über eine Verbindungsleitung (20) entweder in die Kühlmittelvorlaufleitung (8) oder in die Kühlmittelrücklaufleitung (9) geleitet wird, um den Schweißbrennerkühlkreis im Schweißbrenner (3) und zumindest teilweise die Kühlmittelvorlaufleitung (8) und die Kühlmittelrücklaufleitung (9) mit Schutzgas zu spülen.

12. Verfahren nach Anspruch 11, **dadurch gekennzeichnet, dass** für eine vorgegebene Spülzeit (t_{S}) mit Schutzgas gespült wird.

13. Verfahren nach Anspruch 11, **dadurch gekennzeichnet, dass** solange gespült wird, bis durch einen Sensor (25) entweder Schutzgas oder eine fehlende Kühlmittelströmung in der Kühlmittelvorlaufleitung (8) oder Kühlmittelrücklaufleitung (9) detektiert wird.

14. Verfahren nach Anspruch 12 oder 13, **dadurch gekennzeichnet, dass** nach dem Spülen mit einer ersten Spülzeit (t_{S1}) während einer zweiten Spülzeit (t_{S2}) gepulst mit Schutzgas gespült wird.

15. Verfahren nach einem der Ansprüche 11 bis 14, **dadurch gekennzeichnet, dass** vor dem Spülen mit Schutzgas für eine vorgegebene Abkühlzeit weiter Kühlmittel durch den Schweißbrenner (3) umgewälzt wird.

16. Verfahren nach einem der Ansprüche 11 bis 14, **dadurch gekennzeichnet, dass** vor dem Spülen mit Schutzgas weiter Kühlmittel durch den Schweißbrenner (3) umgewälzt wird, bis der Schweißbrenner (3) eine vorgegebene Temperatur erreicht hat.
